# EUROPEAN PATENT SPECIFICATION

(11) **EP 2 643 642 B1**
(45) Date of publication and mention of the grant of the patent: **06.04.2016**
(21) Application number: 11794242.5
(22) Date of filing: 23.11.2011
(51) Int. Cl.: F24H 9/20, G05D 23/00, G05D 23/20

(54) **WATER-HEATER TEMPERATURE SELECTOR**
TEMPERATURWÄHLER FÜR EINEN WASSERHEIZER
SELECTEUR DE TEMPÈRATURE POUR UNE CHAUDIÈRE

(30) Priority: 23.11.2010 IT MI20102164
(43) Date of publication of application: 02.10.2013
(73) Proprietor: Riello S.p.A., Legnago (IT)
(72) Inventor: BRAMBATI, Fabrizio, I-20060 Pozzo d'Adda (IT); PIA, Antonio, I-23900 Lecco (IT); CIOFOLO, Noe', I-23816 Barzio (IT)
(74) Representative: Eccetto, Mauro
(86) International application number: PCT/IB2011/055260
(87) International publication number: WO 2012/070004

(56) References cited:
- EP-A1- 2 093 517
- WO-A1-03/006857
- DE-A1- 3 207 427
- GB-A- 503 408
- US-A1- 2004 108 007

## Description

### TECHNICAL FIELD

The present invention relates to a temperature selector for a water-heater for producing domestic hot water.

### BACKGROUND ART

As is known, water-heaters, such as those for domestic use, comprise a burner; water supply and distribution circuits; and a heat exchanger for transferring part of the heat produced by the burner to the water flowing in the supply and distribution circuits.

To improve combustion and enhance efficiency, the heat produced by the burner is normally constant when the heater is running; and the temperature of the water from the heater is normally regulated by regulating water flow to the heat exchanger. That is, the greater the flow of water to the heat exchanger, the lower the temperature at the outlet, and vice versa.

Flow is normally regulated by a special so-called temperature selector valve located upstream from the heat exchanger and normally operated manually (e.g. by a knob). If correctly sized, the flow regulating valve or temperature selector permits fairly accurate control of the temperature of the water from the heater. GB 503 408 shows a temperature selector according to the prior art.

One drawback of known temperature selectors, however, lies precisely in their size. That is, whole series of temperature selectors, of the same design but different sizes, must be manufactured for water-heaters of different sizes. Likewise, the regulator assemblies I nwhich the temperature selectors are installed must also be adapted to different dimension of temperature selectors, accoridng to the size of the water-heaters.

The absence of a one-for-all temperature selector therefore seriously affects the end cost of the water-heater.

### DISCLOSURE OF INVENTION

It is an object of the present invention to provide a temperature selector designed to eliminate the above drawbacks, and which, in particular, can be installed in water-heaters of different sizes.

According to the present invention, there is provided a temperature selector for a water-heater, comprising a hollow body open at one end, extending along an axis, and having a lateral wall in which at least one opening is formed;
characterized by a shutter movable axially along the hollow body between a first position of minimum overlap between the opening and the shutter, and a second position of maximum overlap between the opening and the shutter.

The movable shutter allows continuous adjustment of water flow through the opening. And, because water flow to the heat exchanger of a water-heater also determines the temperature of the water supplied by the heater to the user devices, temperature can be regulated accurately over a wide range, substantially determined by the size (diameter) of the opening.

According to a further aspect of the invention, the shutter and the hollow body are connected by a threaded coupling.

Water flow and temperature can thus be regulated accurately.

According to a further aspect of the invention, the lateral wall has at least one further opening, and overlap between the further opening and the shutter is minimum in the first position of the shutter, and maximum in the second position of the shutter.

Providing a number of openings further increases the adjustment range and therefore also precision.

### BRIEF DESCRIPTION OF THE DRAWINGS

Some non-limiting embodiment of the present invention will be described by way of example with reference to the accompanying drawings, in which :
Figure 1 shows a simplified block diagram of a domestic water-heater;
Figure 2 shows a simplified front view of the Figure 1 water-heater;
Figure 3 shows an enlarged top plan view of a regulator assembly incorporating a water-heater temperature selector in accordance with one embodiment of the present invention;
Figure 4 shows a front view of the Figure 3 regulator assembly;
Figure 5 shows a front section of the Figure 3 regulator assembly along line V-V in Figure 3;
Figure 6 shows a top plan view of the Figure 3 regulator assembly sectioned along line VI-VI in Figure 4;
Figure 7 shows a view in perspective of the temperature selector of the Figure 3 assembly;
Figure 8 shows a rear view of the Figure 7 selector;
Figure 9 shows a top plan view of the Figure 7 temperature selector sectioned along line IX-IX in Figure 8;
Figure 10 shows the view of Figure 6, with the temperature selector in a different configuration;
Figure 11 shows the view of Figure 5, with the temperature selector in a different configuration;
Figure 12 shows a top plan view, sectioned along a horizontal longitudinal plane, of a temperature selector in accordance with a different embodiment of the present invention.

### BEST MODE FOR CARRYING OUT THE INVENTION

Here and hereinafter, the term 'temperature selector' is intended to mean a special flow regulating valve particularly (though not exclusively) suitable for use in domestic water-heaters to regulate water flow to the heat exchanger.

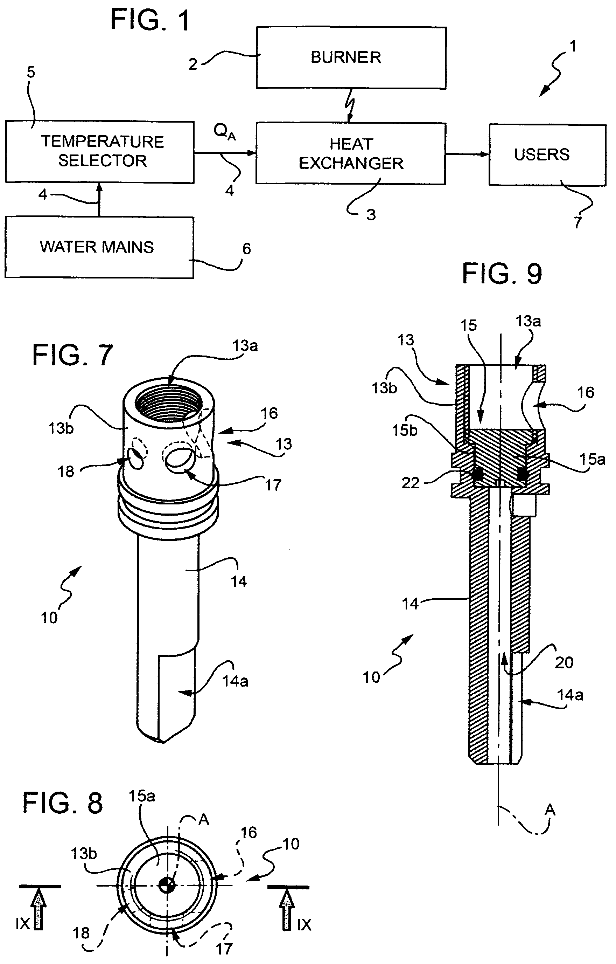

Figure 1 shows a simplified block diagram of a domestic water-heater.

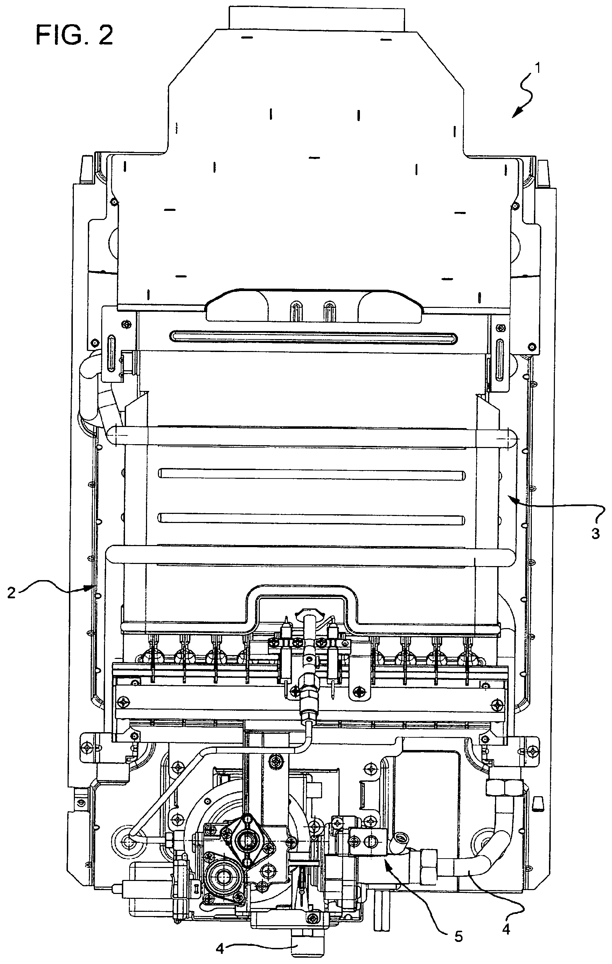

Water-heater 1 comprises a burner 2; a heat exchanger 3 connected to burner 2; and a feed pipe 4 fitted with a regulator assembly 5. Feed pipe 4 is connected to a water mains 6, and the outlet of heat exchanger 3 feeds user, e.g. domestic user, devices 7. Part of feed pipe 4, the regulator assembly, burner 2, and heat exchanger 3 are also shown in Figure 2.

When running, burner 2 supplies constant heat to heat exchanger 3; and regulator assembly 5 regulates water flow Q_{A} from mains 6 to heat exchanger 3, and so also determines the temperature of the water from heat exchanger 3 to user devices 7.

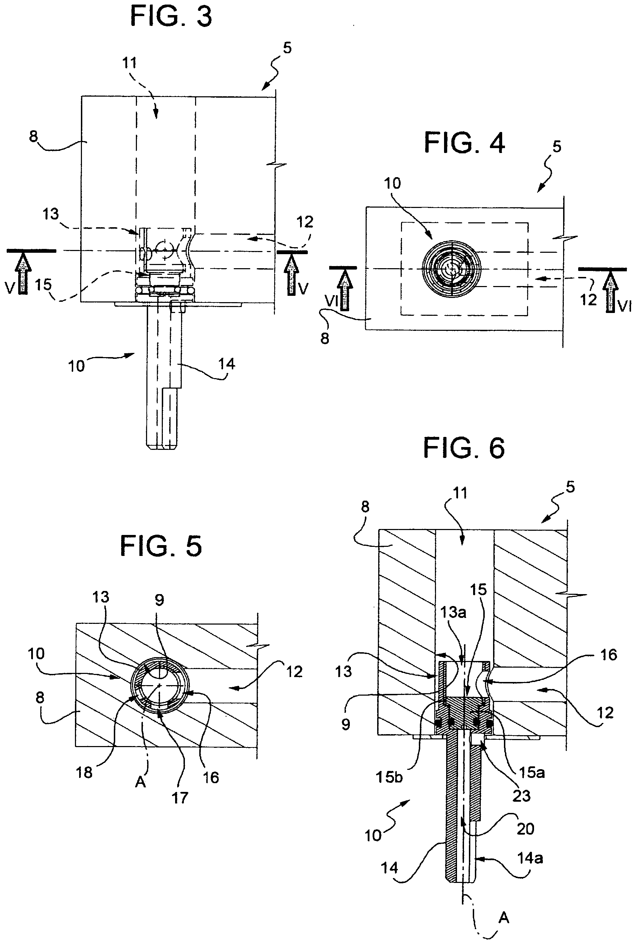

With reference to Figures 3-6, regulator assembly 5 comprises a body 8, in which a seat 9 is formed; and a temperature selector 10 housed in seat 9. And an inlet conduit 11 and outlet conduit 12 connect seat 9 and temperature selector 10 to feed pipe 4.

Temperature selector 10, shown in more detail in Figures 7-9, comprises a hollow body 13 open at one end 13a; a stem 14; and a shutter 15 housed in hollow body 13.

Hollow body 13 is substantially cylindrical, and extends along an axis A. In the embodiment described, a lateral wall 13b of hollow body 13 has three circular openings 16, 17, 18 of different diameters and with respective axes perpendicular to axis A. More specifically, the diameter of opening 16 is larger than the diameter of opening 17, which in turn is larger than the diameter of opening 18. Openings 16, 17, 18 are positioned angularly so they can only be positioned one at a time facing outlet conduit 12. Openings 17, 18 are located axially within a band defined by opening 16; and, in one embodiment, the centres of openings 16, 17, 18 are substantially aligned.

Stem 14 is formed in one piece with hollow body 13, and extends along axis A from the bottom of hollow body 13 opposite open end 13a.

Stem 14 has an axial through channel 20, along which shutter 15 is accessible from the outside by a tool, such as a screwdriver; and a portion of a face 14a of stem 14 is flattened for rigid angular connection to a control member, such as a knob, not shown for the sake of simplicity.

Shutter 15 is housed inside hollow body 13, extends along axis A, and has a substantially cylindrical base 15a; and a flat head 15b, which, in the embodiment shown, projects radially outwards from base 15a, and is connected by a threaded coupling to lateral wall 13b of hollow body 13. The face of base 15a opposite head 15b is accessible from the outside along channel 20, and has a slot for a tool, such as a screwdriver (not shown).

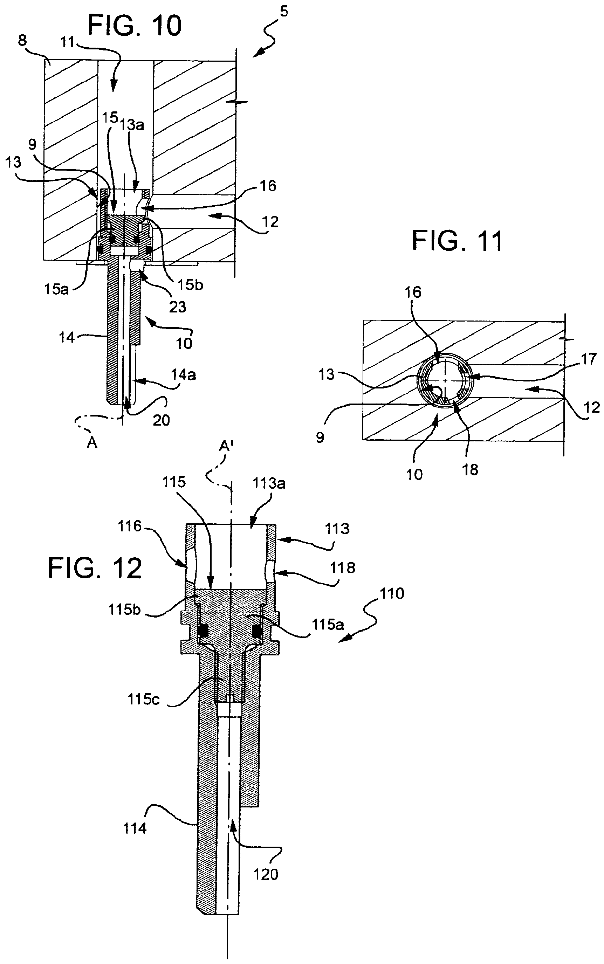

Shutter 15 is movable axially between a first position (Figures 6 and 9) and a second position (Figure 10).

In the first position, overlap between head 15b of shutter 15 and openings 16, 17, 18 is minimum - more specifically, zero in the embodiment shown - so openings 16, 17, 18 are all clear and in no way obstructed by shutter 15.

In the second position, overlap between head 15b of shutter 15 and openings 16, 17, 18 is maximum. But, even when shutter 15 is in the second position, openings 16, 17, 18, which have different diameters, are so located as never to be fully closed, so a gap is left in any operating configuration.

In a range of intermediate positions between the first and second, shutter 15 partly closes openings 16, 17, 18, so the gaps in the openings can be regulated.

Leakage into channel 20 is prevented by a sealing ring 22 fitted inside an annular seat in the outer surface of base 15a, and which cooperates with lateral wall 13b of the hollow body.

With reference to Figures 3-6, 10 and 11, temperature selector 10 is housed inside seat 9 in body 8 of regulator assembly 5, with stem 14 projecting outwards through a hole 23, and is rotatable about axis A, which is substantially perpendicular to the axis of outlet conduit 12. Inlet conduit 11 of regulator assembly 5 is connected fluidically to the inside of hollow body 13 through open end 13a of hollow body 13; and outlet conduit 12 faces hollow body 13 so that the inside of hollow body 13 communicates with outlet conduit 12 via selectively one of openings 16, 17, 18, depending on the angular position of temperature selector 10. In the Figure 6 configuration, for example, temperature selector 10 is oriented with the largest-diameter opening 16 facing outlet conduit 12; whereas, in the Figure 11 configuration, temperature selector 10 is oriented with the medium-diameter opening 17 facing outlet conduit 12.

Figure 12 shows a temperature selector 110 in accordance with a different embodiment of the present invention, and which comprises a hollow body 113 and a stem 114, which extend about an axis A' and are substantially similar to hollow body 13 and stem 14 described with reference to Figures 3-11. More specifically, hollow body 113 has an open end 113a; and a lateral wall with circular openings 116, 118 of different diameters. Stem 114 has an axial channel 120; and temperature selector 110 comprises a shutter 115 housed inside hollow body 113.

Shutter 115 extends along axis A', and comprises a substantially cylindrical base 115a; a flat head 115b projecting radially outwards from base 115a; and an axial appendix 115c, which is housed inside channel 120, is connected to the wall of channel 120 by a threaded coupling, is accessible from the outside along channel 120, and has a slot for a tool, such as a screwdriver (not shown).

In this case, too, shutter 115 is movable between a first position, in which overlap between head 115b of shutter 115 and openings 116, 118 is minimum, and a second position, in which overlap between head 115b of shutter 15 and openings 116, 118 is maximum.

The temperature selector described allows a wide range of adjustment to the temperature of the hot water produced by domestic water-heaters, by the position of the shutter being adjustable to regulate the gap in each of the circular openings in the hollow body between a maximum and minimum setting. Which means the same type of selector (and regulator assembly) can be installed on water-heaters of different sizes.

Clearly, changes may be made to the temperature selector according to the present invention without, however, departing from the scope of the accompanying Claims.

## Claims

1. A temperature selector for a water-heater, comprising a hollow body (13; 113) open at one end (13a; 113a), extending along an axis (A; A'), and having a lateral wall (13b) in which at least one opening (16, 17, 18; 116, 118) is formed;
**characterized by** comprising a shutter (15; 115) movable axially along the hollow body (13; 113) between a first position of minimum overlap between the opening (16, 17, 18; 116, 118) and the shutter (15; 115), and a second position of maximum overlap between the opening (16, 17, 18; 116, 118) and the shutter (15; 115).

2. A temperature selector as claimed in Claim 1, wherein the opening (16, 17, 18; 116, 118) is fully open when the shutter (15; 115) is in the first position.

3. A temperature selector as claimed in Claim 1 or 2, wherein the opening (16, 17, 18; 116, 118) is partly closed when the shutter (15; 115) is in the second position.

4. A temperature selector as claimed in any one of the foregoing Claims, wherein the shutter (15; 115) comprises a head (15b; 115b) designed to at least partly close the opening (16, 17, 18; 116, 118) at least in an intermediate position of the shutter (15; 115) between the first position and the second position; and wherein sealing means (22) are located between the hollow body and the shutter (15; 115) to prevent fluid leakage between the shutter (15; 115) and the lateral wall (13b) of the hollow body (13; 113).

5. A temperature selector as claimed in any one of the foregoing Claims, wherein the shutter (15; 115) and the hollow body (13; 113) are connected by a threaded coupling.

6. A temperature selector as claimed in Claim 5, wherein the threaded coupling is defined between the shutter (15) and the lateral wall (13b) of the hollow body (13).

7. A temperature selector as claimed in any one of the foregoing Claims, and comprising a stem (14; 114) extending axially in a direction away from the hollow body (13; 113).

8. A temperature selector as claimed in Claim 7, wherein the stem (14; 114) has an axial through channel (20; 120), and the shutter (15; 115) is accessible from the outside along the channel (20; 120).

9. A temperature selector as claimed in Claims 5 and 8, wherein the shutter (115) has an axial appendix (115c) housed in the channel (120), and the threaded coupling is defined between the axial appendix and a wall of the channel (120).

10. A temperature selector as claimed in any one of the foregoing Claims, wherein the lateral wall (13b) has at least one further opening (16, 17, 18; 116, 118); and overlap between the further opening (16, 17, 18; 116, 118) and the shutter (15; 115) is minimum in the first position of the shutter (15; 115), and maximum in the second position of the shutter (15; 115).

11. A regulator assembly for a water-heater, comprising an inlet conduit (11); an outlet conduit (12); and a temperature selector (10) as claimed in any one of the foregoing Claims and located between the inlet conduit (11) and the outlet conduit (12).

12. A regulator assembly as claimed in Claim 11, wherein the temperature selector (10) is housed in a seat (9) to rotate about the axis (A), so that the opening (16, 17, 18) faces the outlet conduit (12) at least in one angular position of the temperature selector (10).

13. A regulator assembly as claimed in Claim 11 or 12, wherein the inlet conduit (11) communicates with the open end (13a) of the hollow body (13) of the temperature selector (10).

## Patentansprüche

1. Ein Temperaturwähler für einen Wasserheizer, aufweisend einen Hohlkörper (13; 113), der an einem Ende (13a; 113a) offen ist, und sich entlang einer Achse (A; A') erstreckt und eine laterale Wand (13b) hat, in der wenigstens eine Öffnung (16, 17, 18; 116, 118) ausgebildet ist;
**gekennzeichnet durch** einen Verschluss (15; 115), der axial entlang des Hohlkörpers (13; 113) zwischen einer ersten Position einer minimalen Überlappung der Öffnung (16, 17, 18; 116, 118) und des Verschlusses (15; 115) und einer zweiten Position einer maximalen Überlappung der Öffnung (16, 17, 18; 116, 118) und des Verschlusses (15; 115) bewegbar ist.

2. Ein Temperaturwähler nach Anspruch 1, wobei die Öffnung (16, 17, 18; 116, 118) vollständig geöffnet ist, wenn der Verschluss (15; 115) in der ersten Position ist.

3. Ein Temperaturwähler nach Anspruch 1 oder 2, wobei die Öffnung (16, 17, 18; 116, 118) teilweise geschlossen ist, wenn der Verschluss (15; 115) in der zweiten Position ist.

4. Ein Temperaturwähler nach einem der vorhergehenden Ansprüche, wobei der Verschluss (15; 115) einen Kopf (15b; 115b) aufweist, der derart ausgebildet ist, dass die Öffnung (16, 17, 18; 116, 118) zumindest in einer Zwischenposition des Verschlusses (15; 115) zwischen der ersten Position und der zweiten Position zumindest teilweise geschlossen ist; und wobei Dichtmittel (22) zwischen dem Hohlkörper und dem Verschluss (15; 115) angeordnet sind, um eine Fluidleckage zwischen dem Verschluss (15; 115) und der lateralen Wand (13b) des Hohlkörpers (13; 113) zu verhindern.

5. Ein Temperaturwähler nach einem der vorhergehenden Ansprüche, wobei der Verschluss (15; 115) und der Hohlkörper (13; 113) durch einen Schraubverschluss miteinander verbunden sind.

6. Ein Temperaturwähler nach Anspruch 5, wobei der Schraubverschluss zwischen dem Verschluss (15) und der lateralen Wand (13b) des Hohlkörpers (13) festgelegt ist.

7. Ein Temperaturwähler nach einem der vorhergehenden Ansprüche, und aufweisend einen Schaft (14; 114), der sich in axialer Richtung von dem Hohlkörper (13; 113) weg erstreckt.

8. Ein Temperaturwähler nach Anspruch 7, wobei der Schaft (14; 114) einen axialen Durchgangskanal (20; 120) hat, und der Verschluss (15; 115) von der Außenseite entlang des Kanals (20; 120) zugänglich ist.

9. Ein Temperaturwähler nach Anspruch 5 und 8, wobei der Verschluss (115) einen axialen Ansatz (115c) hat, der von einem Kanal (120) aufgenommen wird, und der Schraubverschluss zwischen dem axialen Ansatz und einer Wand des Kanals (120) festgelegt ist.

10. Ein Temperaturwähler nach einem der vorhergehenden Ansprüche, wobei die laterale Wand (13b) wenigstens eine weitere Öffnung (16, 17, 18; 116, 118) hat; und die Überlappung der weiteren Öffnung (16, 17, 18; 116, 118) und des Verschlusses (15; 115) in der ersten Position des Verschlusses (15; 115) minimal ist und in der zweiten Position des Verschlusses (15; 115) maximal ist.

11. Eine Regeleinheit für einen Wasserheizer aufweisend einen Einlasskanal (11); einen Auslasskanal (12); und einen Temperaturwähler (10) nach einem der vorhergehenden Ansprüche und angeordnet zwischen dem Einlasskanal (11) und dem Auslasskanal (12):

12. Eine Regeleinheit nach Anspruch 11, wobei der Temperaturwähler (10) in einem Sitz (9) um eine Achse (A) drehbar aufgenommen ist, so dass die Öffnung (16, 17, 18) dem Auslasskanal (12) zumindest in einer Winkelposition des Temperaturwählers (10) zugewandt ist.

13. Eine Regeleinheit nach Anspruch 11 oder 12, wobei der Einlasskanal (11) mit dem offenen Ende (13A) des Hohlkörpers (13) des Temperaturwählers (10) kommuniziert.

## Revendications

1. Sélecteur de température pour un chauffe-eau, comprenant un corps creux (13 ; 113) ouvert à une extrémité (13a ; 113a), s'étendant le long d'un axe (A ; A'), et ayant une paroi latérale (13b) dans laquelle au moins une ouverture (16, 17, 18 ; 116, 118) est formée ;
**caractérisé en ce qu'**il comprend un volet obturateur (15 ; 115) mobile axialement le long du corps creux (13 ; 113) entre une première position de chevauchement minimum entre l'ouverture (16, 17, 18 ; 116, 118) et le volet obturateur (15 ; 115), et une deuxième position de chevauchement maximum entre l'ouverture (16, 17, 18 ; 116, 118) et le volet obturateur (15 ; 115).

2. Sélecteur de température selon la revendication 1, dans lequel l'ouverture (16, 17, 18 ; 116, 118) est complètement ouverte quand le volet obturateur (15 ; 115) se trouve dans la première position.

3. Sélecteur de température selon la revendication 1 ou 2, dans lequel l'ouverture (16, 17, 18 ; 116, 118) est partiellement ouverte quand le volet obturateur (15 ; 115) se trouve dans la deuxième position.

4. Sélecteur de température selon l'une quelconque des revendications précédentes, dans lequel le volet obturateur (15 ; 115) comprend une tête (15b ; 115b) conçue pour fermer au moins partiellement l'ouverture (16, 17, 18 ; 116, 118) au moins dans une position intermédiaire du volet obturateur (15 ; 115) entre la première position et la deuxième position ; et dans lequel un moyen d'étanchéité (22) se situe entre le corps creux et le volet obturateur (15 ; 115) afin d'empêcher une fuite de fluide entre le volet obturateur (15 ; 115) et la paroi latérale (13b) du corps creux (13 ; 113).

5. Sélecteur de température selon l'une quelconque des revendications précitées, dans lequel le volet obturateur (15 ; 115) et le corps creux (13 ; 113) sont connectés par un couplage fileté.

6. Sélecteur de température selon la revendication 5, dans lequel le couplage fileté est défini entre le volet obturateur (15) et la paroi latérale (13b) du corps creux (13).

7. Sélecteur de température selon l'une quelconque des revendications précitées, et comprenant une tige (14 ; 114) s'étendant axialement dans une direction s'éloignant du corps creux (13 ; 113).

8. Sélecteur de température selon la revendication 7, dans lequel la tige (14 ; 114) comporte un canal traversant axial (20 ; 120), et le volet obturateur (15 ; 115) est accessible depuis l'extérieur le long du canal (20 ; 120).

9. Sélecteur de température selon les revendications 5 et 8, dans lequel le volet obturateur (115) a un appendice axial (115c) logé dans le canal (120), et le couplage fileté est défini entre l'appendice axial et une paroi du canal (120).

10. Sélecteur de température selon l'une quelconque des revendications précédentes, dans lequel la paroi latérale (13b) a au moins une ouverture supplémentaire (16, 17, 18 ; 116, 118) ; et le chevauchement entre l'ouverture supplémentaire (16, 17, 18 ; 116, 118) et le volet obturateur (15 ; 115) est minimum dans la première position du volet obturateur (15 ; 115), et maximum dans la deuxième position du volet obturateur (15 ; 115).

11. Ensemble régulateur pour un chauffe-eau, comprenant un conduit d'entrée (11) ; un conduit de sortie (12) ; et un sélecteur de température (10) selon l'une quelconque des revendications précédentes et situé entre le conduit d'entrée (11) et le conduit de sortie (12).

12. Ensemble régulateur selon la revendication 11, dans lequel le sélecteur de température (10) est logé dans un siège (9) pour tourner autour de l'axe (A), de sorte que l'ouverture (16, 17, 18) se trouve face au conduit de sortie (12) au moins dans une position angulaire du sélecteur de température (10).

13. Ensemble régulateur selon la revendication 11 ou 12, dans lequel le conduit d'entrée (11) communique avec l'extrémité ouverte (13a) du corps creux (13) du sélecteur de température (10).
